(19)

Europäisches
Patentamt
European
Patent Office
Office européen
des brevets

(11) **EP 4 787 721 A1**

(12) **EUROPEAN PATENT APPLICATION**
published in accordance with Art. 153(4) EPC

(43) Date of publication:
 **05.08.2026  Bulletin 2026/32**

(21) Application number: **23953560.2**

(22) Date of filing: **27.09.2023**

(51) International Patent Classification (IPC):
 *H04B 7/0456* (2017.01)

(52) Cooperative Patent Classification (CPC):
 **H04B 7/0456**

(86) International application number:
 **PCT/CN2023/122294**

(87) International publication number:
 **WO 2025/065408 (03.04.2025 Gazette 2025/14)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(71) Applicant: **GUANGDONG OPPO MOBILE
 TELECOMMUNICATIONS
 CORP., LTD.
 Dongguan, Guangdong 523860 (CN)**

(72) Inventors:
 • **HUANG, Yingpei
   Dongguan, Guangdong 523860 (CN)**
 • **SHI, Zhihua
   Dongguan, Guangdong 523860 (CN)**
 • **CHEN, Wenhong
   Dongguan, Guangdong 523860 (CN)**
 • **LIU, Zhe
   Dongguan, Guangdong 523860 (CN)**

(74) Representative: **Grassi, Stefano
 Bugnion S.p.A.
 Viale Lancetti, 17
 20158 Milano (IT)**

(54) **WIRELESS COMMUNICATION METHOD AND APPARATUS, DEVICES, CHIP, STORAGE
 MEDIUM, PRODUCT, AND PROGRAM**

(57) Embodiments of the present application provide a wireless communication method and apparatus, a terminal device, and a network device. The method comprises: a terminal device sending first information to a network device, the first information being used to indicate a first parameter; and, on the basis of the first parameter and a discrete Fourier transform (DFT) vector, determining a precoding matrix of the terminal device and a downlink channel of the network device.

**FIG. 4**

EP 4 787 721 A1

**Description**

TECHNICAL FIELD

Embodiments of the present application relate to the technical field of communication, and in particular to a method and apparatus for radio communication, a device, a chip, a storage medium, a product, and a program.

BACKGROUND

In the design of Channel State Information (CSI) feedback of New Radio (NR) system, the feedback scheme based on codebook is mainly used to realize the extraction and feedback of channel characteristics. However, at present, the codebook fed back by the terminal device is only suitable for scenarios where the terminal device is far away from the network device, and cannot accurately indicate the channel characteristics in the near-field scenarios, thereby reducing the accuracy of the CSI feedback and reducing the performance of precoding.

SUMMARY

Embodiments of the present application provide a method and apparatus for radio communication, a device, a chip, a storage medium, a product, and a program.

In a first aspect, an embodiment of the present application provides a method for radio communication, which includes the following operation.

A terminal device transmits first information to a network device. The first information is used to indicate first parameter(s), and a precoding matrix of a downlink channel between the terminal device and the network device is determined based on the first parameter(s) and a discrete Fourier transform (DFT) vector.

In a second aspect, an embodiment of the present application provides a method for radio communication, which includes the following operations.

A network device receives first information transmitted by a terminal device. The first information is used to indicate first parameter(s).

The network device determines a precoding matrix of a downlink channel between the terminal device and the network device based on the first parameter(s) and a discrete Fourier transform (DFT) vector.

In a third aspect, an embodiment of the present application provides an apparatus for radio communication, which is applied to a terminal device and includes a transmitting unit.

The transmitting unit is configured to transmit first information to a network device. The first information is used to indicate first parameter(s), and a precoding matrix of a downlink channel between the terminal device and the network device is determined based on the first parameter(s) and a discrete Fourier transform (DFT) vector.

In a fourth aspect, an embodiment of the present application provides an apparatus for radio communication, which is applied to a network device and includes a receiving unit and a determining unit.

The receiving unit is configured to receive first information transmitted by a terminal device, wherein the first information is used to indicate first parameter(s).

The determining unit is configured to determine a precoding matrix of a downlink channel between the terminal device and the network device based on the first parameter(s) and a discrete Fourier transform (DFT) vector.

In a fifth aspect, the terminal device provided by an embodiment of the present application includes a processor and a memory. The memory is configured to store a computer program and the processor is configured to invoke and execute the computer program stored in the memory to perform the above method for radio communication.

In a sixth aspect, the network device provided by an embodiment of the present application includes a processor and a memory. The memory is configured to store a computer program and the processor is configured to invoke and execute the computer program stored in the memory to perform the above method for radio communication.

A chip provided by an embodiment of the present application is configured to implement the above method for radio communication.

Specifically, the chip includes a processor for invoking and executing a computer program from a memory such that a device on which the chip is mounted performs the above method for radio communication.

A computer-readable storage medium provided by an embodiment of the present application is configured to store a computer program. The computer program causes a computer to implement the above method for radio communication.

A computer program product provided by an embodiment of the present application includes computer program instructions. The computer program instructions cause a computer to implement the above method for radio communication.

The computer program provided by the embodiment of the present application causes a computer to execute the above method for radio communication when it is run on the computer.

The embodiment of the present application provides a method for radio communication. A terminal device may indicate first parameter(s) to a network device through first information. Correspondingly, the network device may determine a precoding matrix of a downlink channel based on the first parameter(s) indicated by the terminal device and a DFT vector, and adjust the DFT vector in a far-field scenario through the first parameter(s), thereby obtaining a precoding matrix including the near-field channel characteristics, improving the accuracy of CSI feedback in the near-field scenario, and improving communication performance.

BRIEF DESCRIPTION OF THE DRAWINGS

The accompanying drawings illustrated herein are used to provide further understanding of the disclosure and constitute a part of the disclosure, and illustrative embodiments of the disclosure and their description are used to explain the disclosure instead of constituting improper limitation to the disclosure. In the accompanying drawings, the following figures are shown.

FIG. 1 is a schematic diagram of an application scenario according to an embodiment of the present application.
FIG. 2 is a schematic structural diagram of an eTypeII codebook according to an embodiment of the present application.
FIG. 3 is a schematic diagram of a positional relationship between a terminal device and an antenna array according to an embodiment of the present application.
Fig. 4 is a flow chart of a method for radio communication according to an embodiment of the present application.
FIG. 5A is a schematic diagram of communication performance of terminal devices at different positions in a spatial coordinate system in a related art according to an embodiment of the present application.
FIG. 5B is a schematic diagram of communication performance of terminal devices at different positions in the communication method according to an embodiment of the present application.
Fig. 6 is a schematic structure diagram of an apparatus 600 for radio communication according to an embodiment of the present application.
Fig. 7 is a schematic structure diagram of an apparatus 700 for radio communication according to an embodiment of the present application.
Fig. 8 is a schematic structure diagram of a communication device according to an embodiment of the present application.
Figure 9 is a schematic structure diagram of a chip according to an embodiment of the present application.
Fig. 10 is a schematic block diagram of a communication system according to an embodiment of the present application.

DETAILED DESCRIPTION

Hereinafter, the technical solutions in the embodiments of the present application will be described with reference to the accompanying drawings in the embodiments of the present application, and it is obvious that the described embodiments are part of the embodiments of the present application, but not all the embodiments. Based on the embodiments in the present application, all other embodiments obtained by those skilled in the art without creative work fall within the scope of protection of the present application.

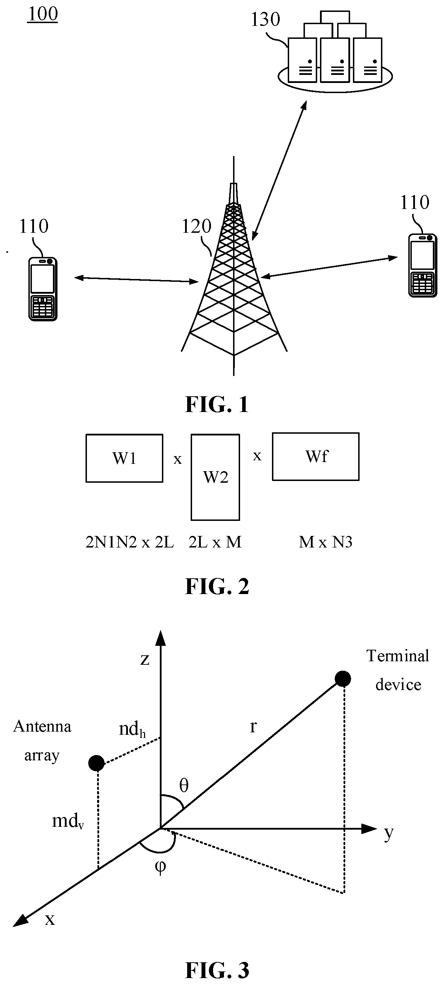

FIG. 1 is a schematic diagram of an application scenario of an embodiment of the present application.

As shown in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present application are only illustrated with reference to the communication system 100, but the embodiments of the present application are not limited thereto. That is, the technical solutions of the embodiments of the present application can be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 shown in FIG. 1, the network device 120 may be an access network device that communicates with the terminal device 110. The access network device may provide communication coverage for a particular geographic area and may communicate with a terminal device 110 (e.g., a UE) located within that coverage area.

The network device 120 may be an Evolutionary Node B, eNB, or eNodeB in a Long Term Evolution (LTE) system, a Next Generation Radio Access Network (NG RAN) device, a base station (gNB) in an NR system, a radio controller in a Cloud Radio Access Network (CRAN), or a relay station, an access point, a vehicle-mounted device, a wearable device, a hub, a switch, a bridge, a router, or a network device in a future evolved Public Land Mobile Network (PLMN).

The terminal device 110 may be any terminal device including, but not limited to, a terminal device that connects to the network device 120 or other terminal devices using a wired or wireless connection.

For example, the terminal device 110 may refer to an access terminal, a User Equipment (UE), a subscriber unit, a subscriber station, a mobile station, a mobile terminal, a remote station, a remote terminal, a mobile device, a user terminal, a terminal, a radio communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with radio communication functionality, a computing device or other processing device connected to a wireless modem, a vehicle-mounted device, a wearable device, a terminal device in a 5G network or a terminal device in a future evolution network, or the like.

The terminal device 110 may be used for device-to-device (D2D) communication.

The radio communication system 100 may further include a core network device 130 that communicates with the base station, and the core network device 130 may be a 5G core network (5G Core, 5GC) device, for example, an Access and Mobility Management Function (AMF), for another example, an Authentication Server Function (AUSF), for another example, a User Plane Function (UPF), for another example, a Session Management Function (SMF). Alternatively, the core network device 130 may also be an Evolved Packet Core (EPC) device of an LTE network, for example, a Session Management Function + Core Packet Gateway (SMF + PGW-C) device. It should be understood that the SMF + PGW-C can simultaneously implement functions that the SMF and PGW-C can implement. In the process of network evolution, the above mentioned core network devices may be called by other names, or a new network entity may be formed by dividing the functions of the core network, which is not limited by the embodiments of the present application.

The respective functional units in the communication system 100 may also establish a connection between each other through a next generation network (NG) interface to achieve communication.

For example, the terminal device establishes an air interface connection with the access network device through the NR interface, so as to transmit user plane data and control plane signaling. The terminal device can establish a control plane signaling connection with the AMF through the NG interface 1 (referred to as N1 for short). An access network device, such as a next generation radio access base station (gNB), can establish a user plane data connection with the UPF through an NG interface 3 (referred to as N3 for short). The access network device can establish a control plane signaling connection with the AMF through the NG interface 2 (referred to as N2 for short). The UPF can establish a control plane signaling connection with the SMF through the NG interface 4 (referred to as N4 for short). The UPF can interact user plane data with the data network through the NG interface 6 (referred to as N6 for short).The AMF may establish a control plane signaling connection with the SMF through the NG interface 11 (referred to as N11 for short). The SMF may establish a control plane signaling connection with the PCF through the NG interface 7 (referred to as N7 for short).

FIG. 1 For example illustrates one base station, one core network device, and two terminal devices. Alternatively, the radio communication system 100 may include a plurality of base station devices and another number of terminal devices may be included within the coverage range of each base station, and the embodiments of the present application are not limited thereto.

It should be noted that FIG. 1 only illustrates a system applicable to the present application in the form of an example, and of course, the method shown in the embodiments of the present application can also be applied to other systems. Further, the terms "system" and "network" are often used interchangeably herein. Herein, the term "and/or" is only an association relationship describing associated objects, and means that there may be three relationships, for example, A and/or B, which may mean that A alone exists, A and B simultaneously exist, and B alone exists. In addition, the character "/" herein generally indicates that the related objects before and after this character are in an "or" relationship. It should also be understood that the "indication" mentioned in the embodiments of the present application may be a direct indication, an indirect indication, or an associated relationship. For example, A indicates B, which may mean that A directly indicates B, for example, B can be acquired by A. It may also mean that A indicates B indirectly, for example, A indicates C, and B can be obtained through C. It may also mean that there is an association relationship between A and B. It should also be understood that "correspondence" mentioned in the embodiments of the present application may indicate that there is a direct correspondence or indirect correspondence between the two, may indicate that there is a correlation relationship between the two, or may indicate a relationship between indicating and being indicated, configuring and being configured, or the like. It should also be understood that the "predefined" or "predefined rules" mentioned in the embodiments of the present application may be implemented by storing corresponding codes, tables, or other manners that can be used to indicate relevant information in advance in devices (e.g., including terminal devices and network devices), and the present application does not limit specific implementations thereof. For example, predefined may refer to defined in the protocol. It should also be understood that in the embodiments of the present application, the "protocol" may refer to a standard protocol in the field of communication, and may include, for example, an LTE protocol, an NR protocol, and related protocols applied to future communication systems, and the present application does not limit this.

In the current CSI feedback design, the codebook-based scheme is mainly used to realize channel feature extraction and feedback. Specifically, after the signal receiving end performs channel estimation, the signal receiving end selects a precoding matrix that best matches the channel estimation result from a preset codebook according to a certain optimization criterion, and feeds back information such as an index of the precoding matrix to the signal transmitting end through a feedback link of the air interface, so that the signal transmitting end realizes precoding. Alternatively, the codebook may be divided into a Type 1 (Type I) codebook, a Type 2 (Type II) codebook, and an enhanced Type 2 (eType II) codebook.

Take the eTypeII codebook as an example to introduce the specific method of CSI feedback. The eTypeII codebook is independently encoded in the frequency domain (each subband). Due to the high spatial quantization accuracy, the total feedback amount is too large. By feeding back the frequency-spatial joint codebook, the feedback amount can be greatly saved under the condition of ensuring NR performance. Here, the eTypeII codebook can be

expressed as $\mathbf{W} = W_1 \widehat{W}_2 W_f^H$ .

For example, FIG. 2 provides a schematic structural diagram of an eTypeII codebook. Referring to FIG. 2, $\mathbf{W_1}$ is a matrix of $(2N_1N_2 \times 2L)$. Here, $N_1$ is the number of antenna ports in the first dimension (e.g. horizontal direction), and $N_2$ is the number of antenna ports in the second dimension (e.g., vertical direction). $\mathbf{W_1}$=[B, 0; 0, B], here, all columns in B are a set of L orthogonal basis vectors selected from the Discrete Fourier Transform (DFT) vector space of the eTypeII codebook. It should also be understood that $\mathbf{W_1}$ may be used to indicate 2L spatial beams. $W_f^H$ is a matrix of M×N3, which is specifically used to determine the M DFT basis vectors. The size of $\hat{W}_2$ is (2L×M), and it is used to indicate weighting coefficients indicating arbitrary spatial beam and frequency domain DFT vector pair.

In practical applications, the CSI content reported by the terminal device includes L beams of $\mathbf{W_1}$, M DFT bases indicated by $W_f^H$, and quantized $\hat{W}_2$. Accordingly, the network device may obtain the downlink CSI of each layer through the product of the three.

The influence of the position relationship between the terminal device and the network device on the channel characteristics is described in detail below.

Assume that the network device antenna aperture is D, the wavelength is λ, and the distance between the terminal device and the network device antenna array is r. Here, if $r > \frac{2D^2}{\lambda}$, then it is considered that the terminal device is in the far-field of the antenna array, and its wavefront is approximately a plane wave. If $0.62\sqrt{\frac{D^3}{\lambda}} < r < \frac{2D^2}{\lambda}$, then it is considered that the terminal device is in the near-field of the antenna array, and its wavefront is a spherical wave.

For example, referring to the three-dimensional coordinate system shown in FIG. 3, the antenna array coordinates of the network device are $(x_0, y_0, z_0)$. The coordinates of the terminal device are $(\sin(\theta)\sin(\varphi), r\sin(\theta)\cos(\varphi), r\cos(\theta))$. The distance R from antenna array to terminal device can be expressed by the following formula (1-1).

$$R = \sqrt{(x - x_0)^2 + (y - y_0)^2 + (z - z_0)^2} =$$
$$\sqrt{r^2 - 2x_0 r\sin(\theta)\sin(\varphi) - 2z_0 r\cos(\theta) + x_0^2 + z_0^2} \qquad (1\text{-}1)$$

Perform Taylor expansion on the formula (1), specifically the formula of Taylor expansion is:

$$\sqrt{1 + x} = 1 + \frac{1}{2}x - \frac{1}{8}x^2 + \frac{1}{16}x^4 + \cdots .$$

Formula (1) R can be approximated as the following formula (1-2):

$$R = r\sqrt{1 + \frac{-2x_0 r\sin(\theta)\sin(\varphi) - 2z_0 r\cos(\theta) + x_0^2 + z_0^2}{r^2}} =$$

$$r\left(1 + \frac{1}{2}\frac{-2x_0 r\sin(\theta)\sin(\varphi) - 2z_0 r\cos(\theta) + x_0^2 + z_0^2}{r^2} - \frac{1}{8}\left(\frac{-2x_0 r\sin(\theta)\sin(\varphi) - 2z_0 r\cos(\theta) + x_0^2 + z_0^2}{r^2}\right)^2\right) = r -$$

$$x_0\sin(\theta)\sin(\varphi) - z_0\cos(\theta) + \frac{x_0^2 + z_0^2 - (x_0\sin(\theta)\sin(\varphi) + z_0\cos(\theta))^2}{2r} \quad = \quad r - x_0\sin(\theta)\sin(\varphi) -$$

$$z_0\cos(\theta) + \frac{x_0^2(1 - \sin^2(\theta)\sin^2(\varphi))}{2r} + \frac{z_0^2(1 - \cos^2(\theta))}{2r} - \frac{\sin(\theta)\sin(\varphi)\cos(\theta)x_0 z_0}{r}) \qquad (1\text{-}2)$$

It should be noted that only the term $\frac{1}{r}$ in the formula (2) is retained, and the rest higher-order terms, such as $\frac{1}{r^2}$, $\frac{1}{r^3}$, are omitted.

In practical applications, for the far-field scenario, r >> 0. Based on this, the term $\frac{1}{r}$ included in the formula (1-2) can be ignored. That is, for the far-field scenario, R can be expressed by the formula (1-3).

$$R = r - x_0\sin(\theta)\sin(\varphi) - z_0\cos(\theta) \qquad (1\text{-}3)$$

For the near-field scenario, the term $\frac{1}{r}$ included in formula (1-2) cannot be ignored. Therefore, the distance R from antenna array to terminal device can be expressed by the following formula (1-4).

$$R = r - x_0\sin(\theta)\sin(\varphi) - z_0\cos(\theta) + \frac{x_0^2(1 - \sin^2(\theta)\sin^2(\varphi))}{2r}$$

$$+ \frac{z_0^2(1 - \cos^2(\theta))}{2r} - \frac{\sin(\theta)\sin(\varphi)\cos(\theta)x_0 z_0}{r} \qquad (1\text{-}4)$$

It can be seen that, compared to the far-field, the near-field mainly includes the additional term of order 1/r, that is, $\frac{x_0^2(1 - \sin^2(\theta)\sin^2(\varphi))}{2r} + \frac{z_0^2(1 - \cos^2(\theta))}{2r} - \frac{\sin(\theta)\sin(\varphi)\cos(\theta)x_0 z_0}{r}$ .

Referring to FIG. 3, the antenna array of the network device is in the plane y-z, and its coordinates can be expressed as $(nd_h, 0, md_v)$. $x_0 = nd_h$, $y_0 = 0$, $z_0 = md_v$. Therefore, the channel characteristic of the terminal device can be expressed by the following formula (1-5).

$$h_{n,m}(r)$$
$$= \exp(jkr)\exp(-jknd_h\sin(\theta)\sin(\varphi))\exp(-jkmd_v\cos(\theta))$$
$$\exp\left(jk\frac{n^2 d_h^2(1 - \sin^2(\theta)\sin^2(\varphi))}{2r}\right)$$
$$\exp\left(jk\frac{m^2 d_v^2(1 - \cos^2(\theta))}{2r}\right)\exp\left(-jk\frac{nd_h md_v\sin(\theta)\sin(\varphi)\cos(\theta)}{r}\right)$$

$$(1\text{-}5)$$

Herein, the constant $k = \frac{2\pi}{\lambda}$ .

In the formula (1-5), exp(jkr) is independent of the position of the antenna array, and the phase difference relative to multiple antennas is the same and can be ignored.

The term exp(-jknd$_h$sin(θ) sin(φ)) is the far-field portion associated with the first dimension (e.g. horizontal direction), and the conventional scheme adopts a DFT codebook approximation, where exp(-jknd$_h$sin(θ) sin(φ)) may be expressed as $\exp(-\frac{j2\pi}{N}nl)$ . l/N may be expressed as d$_h$sin(θ) sin(φ) /λ.

Term exp(-jkmd$_v$cos(θ)) is the far-field portion associated with the second dimension (e.g. vertical direction), and the conventional scheme adopts DFT codebook approximation. Herein, exp(-jkmd$_v$cos(θ)) can be expressed as $\exp(-\frac{j2\pi}{M}mp)$ . p/M can be considered as d$_v$cos(θ)/λ.

The multiplication of the above far-field portion associated with the first dimension and the far-field portion associated with the second dimension can be regarded as a multiplication of two vectors (or in the form of a Croneco product).

For the first-order term of $\frac{1}{r}$,, it mainly includes three parts, the $\frac{1}{r}$ order term exp ( $jk\frac{n^2d_h^2(1-\sin^2(\theta)\sin^2(\varphi))}{2r}$ ) of the first dimension, the $\frac{1}{r}$ order term exp ( $jk\frac{m^2d_v^2(1-\cos^2(\theta))}{2r}$ ) of the second-dimension, and the cross term exp ( $-jk\frac{nd_hmd_v\sin(\theta)\sin(\varphi)\cos(\theta)}{r}$ ). It should be noted that $\frac{1}{r}$ and other high order terms are typically used to characterize the channel characteristics of the near-field portion.

It can be understood that at present, the codebook fed back by the terminal device usually only uses the 0-order approximation of the distance, which is suitable for the case where the distance between the terminal device and the network device is long. For the near-field scenario where the distance between terminal devices and network devices is short, the current codebook cannot accurately indicate the channel characteristics in the near-field scenario, thereby reducing the accuracy of the CSI feedback and reducing the performance of precoding.

Based on this, an embodiment of the present application provides a method for radio communication. A terminal device may indicate first parameter(s) to a network device through first information. Correspondingly, the network device may determine a precoding matrix of a downlink channel based on the first parameter(s) indicated by the terminal device and a DFT vector, and adjust the DFT vector in a far-field scenario through the first parameter(s), thereby obtaining a precoding matrix including the near-field channel characteristics, improving the accuracy of CSI feedback in the near-field scenario, and improving communication performance.

In order to facilitate understanding of the technical solutions of the embodiments of the present application, the technical solutions of the present application will be described in detail below with reference to specific embodiments. As an optional solution, the above related technologies can be arbitrarily combined with the technical solutions of the embodiments of the present application, and all of them belong to the scope of protection of the embodiments of the present application. Embodiments of the present application include at least some of the following.

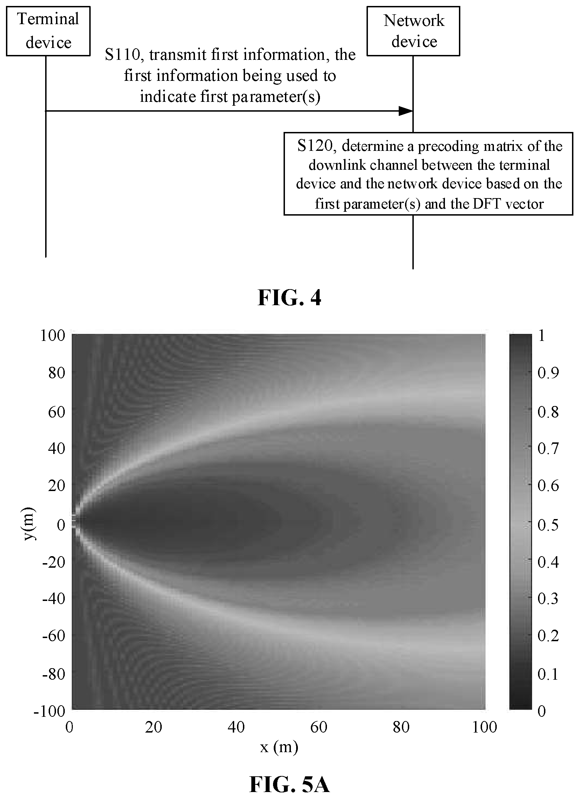

Fig. 4 is a flow chart of a method for radio communication provided by an embodiment of the present application. As shown in Fig. 4, the method includes the following contents.

S110, the terminal device transmits the first information to the network device. Accordingly, the network device receives the first information transmitted by the terminal device. The first information is used to indicate first parameter(s).

S120, the network device determines a precoding matrix of a downlink channel between the terminal device and the network device based on the first parameter(s) and a DFT vector.

It should be noted that in the related art, the network device may determine a precoding matrix of a downlink channel between the terminal device and the network device based on the DFT vector reported by the terminal device. That is, the precoding matrix determined based on the DFT vector may characterize the channel characteristics in the far-field scenario.

In an embodiment of the present application, the terminal device may indicate the first parameter(s) to the network device. The first parameter(s) may be parameter(s) related to the location of the terminal device. For example, the first parameter(s) may be related to the first order term of $\frac{1}{r}$ in formula (1-5). For example, the first parameter(s) may be obtained by quantizing the first order term of $\frac{1}{r}$ in formula (1-5).

It can be understood that the first parameter(s) can characterize channel characteristics in a near-field scenario to a certain extent.

In an embodiment of the present application, the network device may determine the precoding matrix of the downlink channel based on the first parameter(s) indicated by the terminal device and the DFT vector, that is, the network device may jointly determine the precoding matrix of the downlink channel based on the channel characteristics in the near-field scenario and the channel characteristics in the far-field scenario. In other words, the precoding information of the downlink channel between the terminal device and the network device may include near-field related information and far-field related information.

It can be understood that the first parameter(s) may be used to adjust a phase of each element in the DFT vector.

For example, the precoding information of the downlink channel between the terminal device and the network device may be expressed by the following formula (2-1).

$$w = w_{far}diag(w_{near}) \qquad (2\text{-}1)$$

$w_{far}$ characterizes far-field related information, which is composed of DFT vectors. $w_{near}$ characterizes near-field related information, which may be determined based on the first parameter(s). Any one of the elements in the above precoding information w can be expressed by the following formula (2-2).

$$w_{n,l} = \exp(j\frac{2\pi}{N}nl)\exp(-j\beta n^2) \quad (2\text{-}2)$$

In formula (2-2), n is the serial number of the antenna port, and the value range is [0, N1-1]. *l* is the DFT vector sequence number. Term $\exp(j\frac{2\pi}{N}nl)$ is elements in $w_{far}$, characterizing far-field related information. Term $\exp(-j\beta n^2)$ is elements in $w_{near}$, characterizing near-field related information. $\beta$ is the first parameter(s) in the above embodiments and is indicated by the terminal device.

In some embodiments, $\exp(-j\beta n^2)$ may be expressed as $\exp(-j2\pi\beta n^2)$.

It can be seen that, in the method for radio communication provided by the present application. A terminal device may indicate first parameter(s) to a network device through first information. Correspondingly, the network device may determine a precoding matrix of a downlink channel based on the first parameter(s) indicated by the terminal device and a DFT vector, and adjust the DFT vector in a far-field scenario through the first parameter(s), thereby obtaining a precoding matrix including the near-field channel characteristics, improving the accuracy of CSI feedback in the near-field scenario, and improving communication performance.

It should be noted that, there are a plurality of ways in which the terminal device indicates the first parameter(s) to the network device through the first information. In a possible implementation, the terminal device may carry index information of the first parameter(s) in the first candidate set through the first information, and indicate the first parameter(s) to the network device through the index information. In another possible manner, the terminal device may carry the first indication information and the second indication information through the first information, and indicate the first parameter(s) to the terminal device through the two indication information. Hereinafter, the indication manner of the first parameter(s) will be described by two different manners, namely manner# A and manner # B.

In manner# A, the first information includes first index information, and the first index information is index information of the first parameter(s) in a first candidate parameter set.

It can be understood that the terminal device and the network device may predetermine a candidate parameter set (which is referred to as a first candidate parameter set in the embodiment of the present application). The first candidate parameter set may include one or more candidate parameters, and the first parameter(s) may be included in the one or more candidate parameters. In other words, the first parameter may be any one candidate parameter in the first set of candidate parameters. Based on this, the terminal device may indicate the first parameter(s) to the network device through the index information of the first parameter(s) in the first candidate set (which is referred to as first index information in the embodiment of the present application).

For example, the first set of candidate parameters may be $\{\beta_0, \beta_1, .... \beta_{Q-1},\}$. The terminal device may indicate the corresponding parameter by carrying any value of 0 to Q-1 through the first information.

In some embodiments, each candidate parameter in the first candidate parameter set is predefined or configured by the network device. In other words, $\{\beta_0, \beta_1, .... P_{Q-1},\}$ may be predefined or configured by the network device for the terminal device.

For example, the network device may configure the first candidate parameter set for the terminal device through higher layer signaling. For example, the first candidate parameter set is configured through Radio Resource Control (RRC) signaling or media access control control element (MAC CE) signaling. In addition, the network device may configure the first candidate parameter set for the terminal device through physical layer signaling. For example, the first candidate parameter set is configured through Downlink Control Information (DCI).

In the embodiment of the present application, the first candidate parameter set is predefined or preconfigured, and thus the configuration method is simple and flexible.

In some embodiments, each candidate parameter in the first candidate parameter set is determined based on a first reference value and index information corresponding to the each candidate parameters. The first reference value is predefined or configured by the network device.

It can be understood that the terminal device may report the first index information to the network device through the first information, and thus, the network device may calculate and obtain the first parameter(s) by combining the first index information and the predefined/preconfigured first reference value.

In one possible implementation, the first reference value may be a fixed value A.

For example, in the first candidate parameter set $\{\beta_0, \beta_1, \dots \beta_{Q-1}\}$, candidate parameter $\beta_q = A^{-q}$, or candidate parameter $\beta_q = 1 - A^{-q}$, or candidate parameter $\beta_q = \dfrac{q}{Q}$. Here q = [0, Q-1]. The first reference value is predefined or configured by the network device. The terminal device may report the value of q to the network device. The network device may determine the first parameter(s) $\beta$ by combining the value of A and the value of q.

In this implementation, the configuration of the first candidate parameter set may be achieved by predefining or preconfiguring a fixed value A, and thus the configuration method is simple and flexible.

In another possible implementation, the first reference value may be related to a maximum value $\beta_{max}$ of the first candidate parameter set and/or a minimum value $\beta_{min}$ of the first candidate parameter set.

For example, in the first candidate parameter set $\{\beta_0, \beta_1, \dots \beta_{Q-1}\}$, candidate parameter $\beta_q = \beta_{max}\dfrac{q}{Q}$, or candidate parameter $\beta_q = \beta_{max}A^{-q}$, or candidate parameter $\beta_q = (\beta_{max} - \beta_{min})\dfrac{q}{Q} + \beta_{min}$. Here q = [0, Q-1]. $\beta_{max}$ and/or $\beta_{min}$ may be predefined or configured by the network device (for example, $\beta_{max} = 1$). The terminal device may report the value of q to the network device. The network device may determine the first parameter(s) $\{\beta_0, \beta_1, \dots \beta_{Q-1}\}$ by combining the value of $\beta_{min}$ and/or $\beta$ and the value of q.

It should be noted that, the value of $\beta_{max}$ and the value of $\beta_{min}$ may be related to the position range of the terminal device. For example, $\beta_{max}$ maybe associated with $r_{max}$, $\beta_{min}$ may be associated with $r_{min}$. The terminal device may determine $\beta_{max}$ and/or $\beta_{min}$ based on $r_{max}$ and/or $r_{min}$. Usually, the association relationship between $\beta_{max}$ and $r_{max}$ and the association relationship between $\beta_{min}$ and $r_{min}$ may be configured by the network device.

It should be understood that in formula (1-5), the first order term of $\dfrac{1}{r}$ is related to the channel characteristics of the near-field part of the terminal device. Therefore, the first parameter(s) $\beta$ may be obtained by quantizing the first order term of $\dfrac{1}{r}$ in formula (1-5). Taking the $\dfrac{1}{r}$ order term $\exp\left(jk\dfrac{n^2 d_h^2(1-\sin^2(\theta)\sin^2(\varphi))}{2r}\right)$ of the first dimension as an example, it can be organized into $\exp\left(j2\pi\dfrac{d_h^2(1-\sin^2(\theta)\sin^2(\varphi))}{2r\lambda}n^2\right)$. Since $(r, \varphi, \theta)$ is related to the position of the terminal device, then $\beta(r, \varphi, \theta) = 2\pi\dfrac{d_h^2(1-\sin^2(\theta)\sin^2(\varphi))}{2r\lambda} \leq 2\pi\dfrac{d_h^2}{2r\lambda}$ .

Based on this, in an example, it is possible to consider $\beta_{max}$ as a first reference value. Assume that the antenna spacing is $\dfrac{\lambda}{2}$, if the distance between the terminal device and the coordinate origin is r > $r_{min}$, then $\beta(r, \varphi, \theta) \leq 2\pi\dfrac{\lambda}{8r_{min}} = \beta_{max}$. 0 ~$\beta_{max}$ may be uniformly quantized into Q parts, then in the first candidate reference set $\{\beta_1, \beta_2, \dots \beta_Q\}$, candidate parameter $\beta_q = \beta_{max}\dfrac{q}{Q}$, or $\beta_q = \beta_{max}A^{-q}$, or $\beta_q = \beta_{max}(1 - A^{-q})$. Here q = [0, Q-1].

In addition, in another example, it is possible to consider $\beta_{min}$ and $\beta_{max}$ as a first reference value. The range (distance $r_{min}$, $r_{max}$, or $P_{min}$, $P_{max}$) of the terminal device may be defined in advance, such as $r_{min} < r < r_{max}$, $\beta_{min} < \beta(r, \varphi, \theta) < \beta_{max}$. Similarly, $\beta(r, \varphi, \theta)$ is uniformly quantified into Q parts. Herein, $\beta_q = (\beta_{max} - \beta_{min})\dfrac{q}{Q} + \beta_{min}$.

In this implementation, the first parameter $\beta$ may be associated with $\beta_{max}$ and/or the minimum value $\beta_{min}$, or related to $r_{max}$ and/or $r_{min}$. If $r_{max}$ and/or $r_{min}$ estimated by network equipment are more accurate, then the first parameter(s) $\beta$ is more accurate.

In yet another possible implementation, the first reference vale may be parameter $r_0$ related to the position of the terminal device. For example, $r = \dfrac{1}{q}r_0$. In the first candidate parameter set $\{\beta_0, \beta_1, \dots \beta_{Q-1}\}$, candidate parameter

$$\beta_q = 2\pi \frac{d_h^2}{2r_0\lambda}q = 2\pi\frac{c}{r_0}q$$ . $c = \frac{d_h^2}{2\lambda}$ is a fixed constant. The terminal device may report the value of q to the network device.

In some embodiments, each candidate parameter in the first candidate parameter set is determined based on index information of the DFT vector, a second reference value, and index information corresponding to the each candidate parameter, and the second reference value is a predefined or configured by the network device.

It can be understood that the index information of the DFT vector can be used to determine the angle of the terminal device, i.e., $\sin^2(\theta)\sin^2(\varphi) = \frac{l}{N}$ . Herein, *l* is the index information of the DFT vector. N is the point number of DFT, where N = $N_1 * O_1$, $N_1$ is the number of antenna ports in the first dimension, $O_1 = 4$ oversampling parameter. Based on this, $\frac{d_h^2(1-\sin^2(\theta)\sin^2(\varphi))}{2r\lambda}$ can be expressed as $\left\{1 - \left(\frac{l}{N}\right)^2\right\}\frac{d_h^2}{2r\lambda} = \left\{1 - \left(\frac{l}{N}\right)^2\right\}\beta'_{max}$ . In this implementation, $\beta'_{max}$ may be a second reference value predefined or configured by the network device. For example, in the first candidate parameter set $\{\beta_0, \beta_1, ... . \beta_{Q-1,}\}$, candidate parameter $\beta_{q,l} = \beta'_{max}\frac{q}{Q}\left\{1 - \left(\frac{l}{N}\right)^2\right\}$ , or

$\beta_{q,l} = \beta'_{max}A^{-q}\left\{1 - \left(\frac{l}{N}\right)^2\right\}$ , or $\beta_{q,l} = A^{-q}\left\{1 - \left(\frac{l}{N}\right)^2\right\}$ . The terminal device may report the value of q to the network device.

The first candidate parameter set may comprise a first value, and in a case where the first information indicates that the first parameter(s) is the first value, the precoding matrix is determined based on the DFT vector.

The first value may be a value that invalidates near-field related information in the precoding matrix. For example, a value of 0 may be included in the first candidate parameter set, i.e. $\beta \in \{\beta_1, \beta_2, .... \beta_Q, 0\}$. In combination with formula (2-2), when the first information indicates element 0 in the first candidate parameter set, exp(-j$\beta n^2$)=1, $w_{n,l}$ is determined based on the DFT vector $\exp(j\frac{2\pi}{N}nl)$ only. In other words, when the first information indicates element 0 in the first candidate parameter set, the near-field related information is invalid information.

In summary, the terminal device may carry the first index information in the first information, and indicate the first parameter(s) to the network device through the first index information, so that the network device can determine the precoding matrix of the downlink channel based on the first parameter(s) and the DFT vector. In this way, the DFT vector in a far-field scenario is adjusted through the first parameter(s), thereby obtaining a precoding matrix including the near-field channel characteristics, improving the accuracy of CSI feedback in the near-field scenario, and improving communication performance.

In the manner #B, the first information may include first indication information and second indication information, and the first index is determined based on the first indication information and the second indication information.

It can be understood that the terminal device may indicate the first parameter(s) to the network device by using two pieces of indication information. One piece of indication information may be related to a distance between the terminal device and the network device, and the other piece of indication information may be related to an angle between the terminal device and the network device. That is, the terminal device may indicate the first parameter(s) to the network device in combination with the distance-related information and the angle-related information.

In some embodiments, the first indication information may include values of second parameters, and the second indication information may include values of third parameters. The first parameter $\beta$ may be determined based on the second parameters, the third parameters, and the third reference value. In the embodiment of the present application, the third reference value is predefined or configured by the network device.

That is, the terminal device may report the values of the second parameters and the values of the third parameters to the network device directly. Furthermore, the network device may calculate, based on the second parameters, the second parameters and the third reference value, first parameter(s) $\beta$ used for determining the precoding matrix.

It is understood that the second parameters may be quantized values of the distances between the terminal device and the network device, and the third parameters may be quantized values of the angles between the terminal device and the network device. In addition, the third reference value may be related with the configuration information of the antenna array, and the third reference value may be predefined or configured by the network device.

For example, the angle between the terminal device and the network device may be quantified as $Q_\varphi$ parts, herein, $1 - \sin^2(\varphi) = \frac{q_\varphi}{Q_\varphi}$ . Further, $\frac{d_h^2(1-\sin^2(\theta)\sin^2(\varphi))}{2r\lambda} \leq \frac{d_h^2(1-\sin^2(\varphi))}{2r\lambda} = \frac{q_\varphi}{Q_\varphi}\frac{d_h^2}{2r\lambda}$ . Let

$$\beta'_{max} = \frac{d_h^2}{2r_{min}\lambda},$$ $\beta'_{max}$ (or distance r) is uniformly quantized into $Q_r$ parts. The $\beta'_{max}$ is the third reference value, which may be predefined or configured by the network device. Based on this, in the first candidate parameter set, candidate parameter $\beta_{q_\varphi, q_r} = \frac{q_\varphi}{Q_\varphi} \frac{q_r}{Q_r} \beta'_{max}$, or $\beta_{q_\varphi, q_r} = \frac{q_\varphi}{Q_\varphi} \beta'_{max} A^{-q_r}$, or $\beta_q = \frac{q_\varphi}{Q_\varphi} A^{-q_r}$. The terminal device may report the second parameters $q_r$ and the third parameters $q_\varphi$ to the network device.

In some embodiments, the first indication information may include the index information of the second parameters in the second candidate parameter set, and the second indication information may include the index information of the third parameters in the third candidate parameter set.

The first parameter(s) is determined based on the second parameters and the third parameters.

It can be understood that the terminal device and the network device may predetermine two different candidate parameter sets (which are referred to as a second candidate parameter set and a third candidate parameter set in the embodiment of the present application). The second candidate parameter set and the third candidate parameter set each include one or more candidate parameters. And, the second candidate parameter set includes the second parameters, and the third candidate parameter set includes the third parameters.

The one or more candidate parameters included in the second candidate parameter set may be angle candidate values, and the one or more candidate parameters included in the third candidate parameter set may be distance candidate values. Alternatively, the one or more candidate parameters included in the second candidate parameter set may be distance candidate values, and the one or more candidate parameters included in the third candidate parameter set may be angle candidate values.

In an embodiment of the present application, the terminal device may report index information of the second parameters to the network device in the first information to indicate the second parameters. At the same time, the terminal device may report the index information of the third parameters to the network device in the first information to indicate the third parameters. Based on this, the network device may determine the second parameters according to the index information of the second parameters, and determine the third parameters according to the index information of the third parameters. Furthermore, the network device may obtain, based on the second parameters and the third parameters first parameter(s) $\beta$.

In one possible implementation, a value of each candidate parameter in the second candidate parameter set and/or the third candidate parameter set is predefined or configured by the network device.

For example, the network device may configure, through RRC signaling $\{a_1, a_2, \ldots a_{Q1}\}$, the second candidate parameter set, which includes Q1 angle candidate values. The network device may also configure, through RRC signaling $\{b_1, b_2, \ldots b_{Q2}\}$, a third candidate parameter set, which includes Q2 distance candidate values. The first parameter(s) $\beta_{i,j} = a_i b_j$. The terminal device may report $i$ and $j$ to the network device.

In another possible implementation, a value of each candidate parameter in the second candidate parameter set is determined based on a fourth reference value, and the fourth parameter value is predefined or configured by the network device, and/or, a value of each candidate parameter in the third candidate parameter set is determined based on a fifth reference value, and the fifth reference value is predefined or configured by the network device.

In an embodiment, $\beta = 2\pi \frac{d_h^2(1 - \sin^2(\theta)\sin^2(\varphi))}{2r\lambda} = \frac{1}{2}(2\pi)\left(\frac{d_h^2}{\lambda}\right)($

$1 - \sin^2(\theta)\sin^2(\varphi))\left(\frac{1}{r}\right)$. Herein, $\frac{d_h^2}{\lambda}$ is an antenna-related parameter, which may be predefined or configured by the network device. In addition, $(1 - \sin^2(\theta)\sin^2(\varphi))$ is an angle-related parameter, $r$ is a parameter related to distance.

Herein, $(1 - \sin^2(\theta)\sin^2(\varphi))$ can be quantified into Q1 parts to form a second candidate parameter set $\{a_1, a_2, \ldots a_{Q1}\}$, where any one candidate parameter $a_q = q/Q1$, or $b_l = 1 - \left(\frac{l}{N}\right)^2$. In addition, the distance r can be quantified into Q2 parts, $r = \{r_1, r_2, \ldots r_{Q2}\}$, herein, $r_q = \frac{1}{q}r_{max}$, $r_q = \frac{q}{Q2}r_{max}$, $r_q = A^{-q}r_{max}$.

In summary, the terminal device may carry the first indication information and the second indication information in the first information, and indicate the first parameter(s) to the terminal device in terms of two dimensions of angle and distance, so that the network device can determine the precoding matrix of the downlink channel based on the first parameter(s) and the DFT vector. In this way, the DFT vector in a far-field scenario is adjusted through the first parameter(s), thereby obtaining a precoding matrix including the near-field channel characteristics, improving the accuracy of CSI feedback in the near-field scenario, and improving communication performance.

In an embodiment of the present application, the precoding matrix consists of a first sub-matrix of a first dimension (for example, horizontal direction), a second sub-matrix of a second dimension (for example, vertical direction), and merging coefficients. The merging coefficients may be cross term coefficients of the first dimension and the second dimension. That is, the precoding matrix may be composed of a codebook in the horizontal direction, a codebook in the vertical direction, and the cross term coefficient.

The DFT vector may be composed of DFT vectors in two dimensions. Specifically, the DFT vector may include a first DFT vector in a first dimension (e.g., horizontal direction) and/or a second DFT vector in a second dimension (e.g., vertical direction). The DFT vector in each dimension may correspond to a first parameter.

It can be understood that sub-matrices in different dimensions may be respectively determined based on a DFT vector in the corresponding dimension (characterizing far-field related information), and a first parameter corresponding to the DFT vector in the corresponding dimension (characterizing near-field related information). That is, the sub-matrix in the horizontal direction and/or the vertical direction may be formed based on the near-field related information and the far-field related information.

For example, a first sub-matrix in a first dimension (e.g., horizontal direction) may be represented by the following formula (2-3).

$$w_h = w_{h,far} \text{diag}(w_{h,near}) \quad (2\text{-}3)$$

Herein, $w_{h,far}$ may characterize the far-field related information in the first dimension. $w_{h,near}$ characterizes near-field related information in the first dimension. Herein, any one of the elements in the first submatrix $w_h$ can be expressed by the following formula (2-4).

$$w_{n_1,l} = \exp(j\frac{2\pi}{N}n_1 l)\exp(-j\beta n_1^2) \quad (2\text{-}4)$$

In formula (2-4), $n_1$ is the antenna port sequence number of the first dimension, and the range is [0, N1-1]]. $l$ is the sequence number of the first DFT vector, $\beta$ is a first parameter corresponding to the first DFT vector.

Additionally, for the second sub-matrix in the second dimension (e.g. vertical direction), it may be expressed by the following formula (2-5).

$$w_v = w_{v,far} \text{diag}(w_{v,near}) \quad (2\text{-}5)$$

Herein, $w_{v,far}$ may characterize the far-field related information in the second dimension. $w_{v,near}$ characterizes near-field related information in the second dimension. Herein, any one of the elements in the second submatrix $w_v$ can be expressed by the following formula (2-6).

$$w_{n_2,m} = \exp(j\frac{2\pi}{M}n_2 m)\exp(-j\gamma n_2^2) \quad (2\text{-}2)$$

In formula (2-6), n2 is the antenna port sequence number of the second dimension, the range is [0, N2-1]]. m is the sequence number of the second DFT vector, y is a first parameter corresponding to the first DFT vector.

It should be noted that the first parameters corresponding to the DFT vectors in different dimensions may be determined based on the method provided in the above-described embodiment, and will not be repeated here for the sake of simplicity.

In some embodiments, the first sub-matrix in the first dimension of the precoding matrix may be determined based on the first DFT vector and first parameter(s) associated with the first DFT vector, the second sub-matrix in the second dimension of the precoding matrix may be determined based on the second DFT vector only.

For example, the first sub-matrix $w_h = w_{h,far} \text{diag}(W_{h,near})$, the second sub-matrix $w_y = w_{v,far}$. That is, the first sub-matrix in the first dimension is determined by using the near-field correlation information and the far-field correlation information, and the second sub-matrix in the second dimension is determined only by the far-field correlation information.

In some embodiments, the first sub-matrix in the first dimension of the precoding matrix may be determined only based on the first DFT vector, the second sub-matrix in the second dimension of the precoding matrix may be determined based on the second DFT vector and the first parameter(s) associated with the second DFT vector.

For example, the first sub-matrix $w_h = w_{h,far}$, the second sub-matrix $w_y = w_{v,far} \text{diag}(w_{v,near})$. That is, the first sub-matrix in the first dimension is determined only by the far-field correlation information, and the second sub-matrix in the second dimension is determined by using the near-field correlation information and the far-field correlation information.

In some embodiments, the first sub-matrix is determined based on the first DFT vector and first parameter(s) associated with the first DFT vector, and the second sub-matrix is determined based on the second DFT vector and first parameter(s) associated with the second DFT vector.

For example, the first sub-matrix $w_h = w_{h,far} diag(W_{h,near})$, and the second sub-matrix $w_v = w_{v,far} diag(w_{v,near})$. That is, the first sub-matrix in the first dimension and the second sub-matrix in the second dimension are both determined by using the near-field correlation information and the far-field correlation information.

It should be noted that the network device may determine the precoding matrix by selecting any one of the above three methods according to the positional relationship between the terminal device and the terminal device. For example, if the terminal device is in the near-field in the first dimension (horizontal direction) and is in the far-field in the second dimension (vertical direction), the network device may determine the precoding matrix by utilizing $w_h = w_{h,far} diag(W_{h,near})$, $w_v = w_{v,far}$. If the terminal device is in the far-field in the first dimension (horizontal direction) and is in the near-field in the second dimension (vertical direction), the network device may determine the precoding matrix by utilizing $w_h = w_{h,far}$, $w_v = w_{v,far} diag(w_{y,near})$. If the terminal device is in near-field in both dimensions, then the precoding matrix is determined based on $w_h = w_{h,far} diag(w_{h,near})$ and $w_v = w_{v,far} diag(w_{v,near})$.

It should be further noted that the first parameter(s) associated with the first DFT vector and the first parameter(s) associated with the second DFT vector may be determined based on the method provided in the above-described embodiment and will not be repeated here for the sake of simplicity.

For example, the first parameter(s) associated with the first DFT vector is denoted as $\beta(r, \varphi, \theta)$, the first parameter(s) associated with the second DFT vector is denoted as $\gamma(r, \varphi, \theta)$. In combination with formulas (1-5),

$$\beta(r, \varphi, \theta) = 2\pi \frac{d_h^2(1 - \sin^2(\theta)\sin^2(\varphi))}{2r\lambda} \le 2\pi \frac{d_h^2}{2r\lambda}, \quad \gamma(r, \varphi, \theta) = 2\pi \frac{d_v^2(1 - \cos^2(\theta))}{2r\lambda} \le 2\pi \frac{d_v^2}{2r\lambda}$$

. The network device may obtain the range of $\beta(r, \varphi, \theta)$ and $\gamma(r, \varphi, \theta)$ in a preconfigured or predefined manner, i.e., $\beta(r, \varphi, \theta) \le \delta_h$, $\gamma(r, \varphi, \theta) \le \delta_v$. Thus Q-level quantization can be performed on $\beta(r, \varphi, \theta)$ based on $\delta_h$ to obtain a candidate parameter set associated with the first dimension $\{\beta_1, \beta_2, .... \beta_Q,\}$. Based on $\delta_v$, P-level quantization is performed on $\gamma(r, \varphi, \theta)$ to obtain a candidate parameter set associated with the second dimension $\{\gamma_1, \gamma_2, ... . \gamma_P,\}$.

It should be noted that, $\delta_h$ and $\delta_v$ may be the same, i.e., $\delta_h = \delta_v = \delta$. $\delta_h$ and $\delta_v$ may also be different, and the embodiments of the present application are not limited thereto.

In some implementations, Q may equal P. Herein, Q and P may be predefined parameters or configured by the network device. For example, Q is configured by the network device and P is a predefined parameter. Alternatively, P is configured by the network device, and Q is a predefined parameter, which is not limited by the embodiment of the present application.

In some embodiments, the terminal device may indicate q and p to the network device. Herein, quantization performed on $\beta(r, \varphi, \theta)$ and $\gamma(r, \varphi, \theta)$ may adopt linear quantization or log quantization. For uniform quantization

$$\beta_q = \delta \frac{q}{Q}, \quad \gamma_p = \delta \frac{p}{P}. \quad q = [0, Q\text{-}1]$$

, p = [0, P-1]. For log quantification $\beta_q = A^{-q}$, $\gamma_p = B^{-P}$ (or $\beta_q = 1 - A^{-q}$, $\gamma_p = 1 - B^{-p}$).

It should be noted that, the quantification method for $\beta(r, \varphi, \theta)$ and $\gamma(r, \varphi, \theta)$ may be the same or different. For example, reference is shown in Table 1.

Table 1

| $\beta(r, \varphi, \theta)$ | $\gamma(r, \varphi, \theta)$ |
|---|---|
| linear | linear |
| linear | logarithm |
| logarithm | linear |
| logarithm | logarithm |

Herein, $\beta(r, \varphi, \theta)$ and $\gamma(r, \varphi, \theta)$ may both adopt linear quantization, $\beta(r, \varphi, \theta)$ and $\gamma(r, \varphi, \theta)$ may both adopt log quantification. In addition, $\beta(r, \theta, \theta)$ adopts linear quantization, and $\gamma(r, \varphi, \theta)$ adopts log quantification. Or, $\beta(r, \varphi, \theta)$ adopts log quantification, and $\gamma(r, \varphi, \theta)$ adopts linear quantization.

In an embodiment of the present application, the precoding matrix consists of a first sub-matrix of a first dimension (for example, horizontal direction), a second sub-matrix of a second dimension (for example, vertical direction), and a merging coefficients. Herein, the merging coefficients may be cross term coefficients of the first dimension and the second dimension. In combination with the formula (1-5), the merging coefficients $c_{n,m}$ may specifically be formula (2-7).

$$c_{n,m} = \exp\left(-jk\frac{nd_h m d_v \sin(\theta)\sin(\varphi)\cos(\theta)}{r}\right) \quad (2\text{-}7)$$

The merging coefficients may be determined based on fourth parameter(s) reported by the terminal device, and determined based on by a sixth reference value predefined or configured by the network device.

In some embodiments, the method for radio communication provided by the embodiment of the present application may include the following operation.

S130, the terminal device transmits the third information to the network device. The third information is used to indicate fourth parameter(s).

In one possible implementation, the merging coefficients may be determined based on formula (2-8).

$$c_{n1,n2,l,m,\delta_v,\delta_h} = \exp\left(-j2\pi s\frac{n_1 n_2 lm}{NM}\sqrt{\delta_v \delta_h}\right) \quad (2\text{-}8)$$

Herein, $l$ is the sequence number of the first DFT vector in the first dimension, m is the sequence number of the second DFT vector in the second dimension. Herein, $\delta_h$ and $\delta_v$ may be the sixth reference value predefined or configured by the network device.

In this implementation, the fourth parameter(s) may be a symbol indication s, and the value is +1 or - 1. The terminal device indicates the fourth parameter(s) to the network device through the third information. For example, the terminal device may report third information having a length of 1 bit to the network device. When the bit value of the third information is 0, the fourth parameter(s) s = -1; when the bit value of the third information is 1, the fourth parameter(s) s = +1.

In another possible implementation, the terminal device and the network device may predetermine a candidate parameter set (herein referred to as a fourth candidate parameter set), and the terminal device may carry index information of the fourth parameter(s) in the fourth candidate parameter set through the third information, and indicate the fourth parameter(s) through the index information. In this way, the network device may determine fourth parameter(s) in the fourth candidate parameter set based on the index information, thereby calculating the merging coefficients based on the fourth parameter(s) and the sixth reference value.

It should be noted that the method of determining the fourth candidate parameter set is similar to the method of determining the first candidate parameter set in the above-described embodiments. For example, the fourth parameter(s) is denoted herein as $\delta_t(r, \varphi, \theta)$, and in combination with formula (1-5), it can be determined that $\delta_t(r, \varphi, \theta) = 2\pi\frac{d_h d_v \sin(\theta)\sin(\varphi)\cos(\theta)}{2r\lambda} \leq 2\pi\frac{d_h d_v}{2r\lambda}$. The value range $\delta_b$ of $\delta_t(r, \varphi, 0)$, namely $\delta_t(r, \varphi, \theta) \leq \delta_b$, may be determined based on high-level parameter or obtained through predefinition. Based on $\delta_b$, T-level quantization is performed on $\delta t(r, \varphi, \theta)$, such as $\delta_t = \delta_b\frac{t}{T}$, t = [0, T-1]. Based on this, the merging coefficients may be determined based on formula (2-9).

**[0172]** $$c_{n1,n2,s,\delta_b,t} = \exp(-j2\pi s n_1 n_2 \delta_b t/T) \quad (2\text{-}9)$$

Based on this, in the embodiment of the present application, the precoding matrix may be determined based on the following formula (2-10).

$$w_{n1,n2,l,m,p,q} = \exp(j\frac{2\pi}{N}n_1 l)\exp(-j\delta\frac{q}{Q}n_1^2)\exp(j\frac{2\pi}{M}n_2 m)\exp(-j\,\delta\frac{p}{P}n_2^2)\exp(-j2\pi s n_1 n_2 \delta_b t/T) \quad (2\text{-}10)$$

In summary, in the embodiments of the present application, a terminal device may adjust the DFT vector in the first dimension and the second dimension by using the corresponding first parameter(s), thereby obtaining a precoding matrix including the near-field channel characteristics, improving the accuracy of CSI feedback in the near-field scenario, and improving communication performance.

In a near-field scenario, in the near-field scenario, the electric field is usually a spherical wave. The phase difference between the antennas is not only dependent on the angle but also on the distance. Therefore, when determining the precoding matrix, it is necessary to determine the reference position. The selection of the reference position affects the determination of the precoding matrix.

Based on this, in one embodiment of the present application, the precoding matrix may be determined based on one or more of the first parameter(s), the DFT vector, and a distance between an antenna port of the network device and a reference position of an antenna array.

In some embodiments, the reference position may be predefined or configured by the network device. For example, the reference position may be the midpoint of the antenna array, and the reference position may be any other position in the antenna array, as long as the terminal device and the network device agree on it, and the embodiments of the present application do not limit this.

For example, on the basis of FIG. 3, the midpoint of the antenna array may be considered as a reference position, i.e., $X_{ref} = \frac{d_h(N_1-1)}{2}, Z_{ref} = \frac{d_v(N_2-1)}{2}$. Then relative to the reference position, the sub-matrix $w_{n_1,l} = \exp(j\frac{2\pi}{N}n_1l)\exp(-j\beta n_1^2)$ in the first dimension in formula (2-4) can also be expressed as the following formula (2-11).

$$w_{n_1,l} = \exp\left(j\frac{2\pi}{N}n_1l\right)\exp\left(-j\beta\left(n_1 - \frac{N_1-1}{2}\right)^2\right) \quad (2\text{-}11)$$

In addition, relative to the reference position, the sub-matrix $w_{n_2,m} = \exp(j\frac{2\pi}{M}n_2m)\exp(-j\gamma n_2^2)$ in the second dimension in formula (2-6) can be expressed as the following formula (2-12).

$$w_{n_2,m} = \exp\left(j\frac{2\pi}{M}n_2m\right)\exp\left(-j\gamma\left(n_2 - \frac{N_2-1}{2}\right)^2\right) \quad (2\text{-}12)$$

In an embodiment of the present application, for the above precoding matrix, single-polarization antennas or one polarization direction of a multi-polarization antenna is considered. For the multi-polarization antenna, the codebook structure of each polarization direction is the same. That is, the codebook in each polarization direction in the multi-polarization antenna is determined based on the first parameter and the DFT vector.

For multi-polarization antenna, multiple polarization directions may be adjusted by adjusting coefficient to obtain the final precoding matrix. In some embodiments, the adjustment coefficients may be reported by the terminal device to the network device. The terminal device may transmit third information to the network device. The third information is used to indicate an adjustment coefficient of each polarization direction of a multi-polarization antenna array. Based on this, the network device may determine the precoding matrix based on first parameter(s) associated with each polarization direction, DFT vector, and the adjustment coefficient.

For example, taking a dual-polarization antenna as an example, the precoding matrix of the dual-polarization antenna may be expressed by formula (2-13).

$$w = \begin{bmatrix} a \times w_{n1,n2,l,m,p,q} \\ b \times w_{n1,n2,l,m,p,q} \end{bmatrix} \quad (2\text{-}13)$$

Herein, $w_{n1,n2,1,m,p,q}$ refers to formula (2-10). The adjustment coefficient a and the adjustment coefficient b may be reported by the terminal device to the network device through the third information. The coefficient a is determined based on the amplitude of a and/or the phase of a (e.g. with reference to the Rel16 codebook 3-bit amplitude, 16PSK phase) and the coefficient b is determined based on the amplitude of b and/or the phase of b (e.g. with reference to the Rel16 codebook 3-bit amplitude, 16PSK phase). It can be extended to: 1. the amplitude is fixed to 1; 2. 1-4 bits; Phase QPSK, 8PSK, 16PSK; one of a or b is fixed to 1, and in this case the other adjustment coefficient may be reported only.

It should be noted that the adjustment coefficient in each polarization direction may be determined and reported to the network device by the terminal device based on the channel condition.

In summary, in the method for communication provided by the embodiment of the present application, the terminal device may indicate first parameter(s) to a network device through first information. Correspondingly, the network device may determine a precoding matrix of a downlink channel based on the first parameter(s) indicated by the terminal device and a DFT vector. It can be understood that the DFT vector only uses the 0-order approximation of the distance, and in the communication method provided by the embodiment of the present application, a first-order or higher-order approximation correlation parameter of the distance, that is, the first parameter, may be added on the basis of the 0-order approximation of the distance. The DFT vector is adjusted through the first parameter(s), thereby obtaining a precoding matrix including the near-field channel characteristics, improving the accuracy of CSI feedback in the near-field scenario, and improving communication performance.

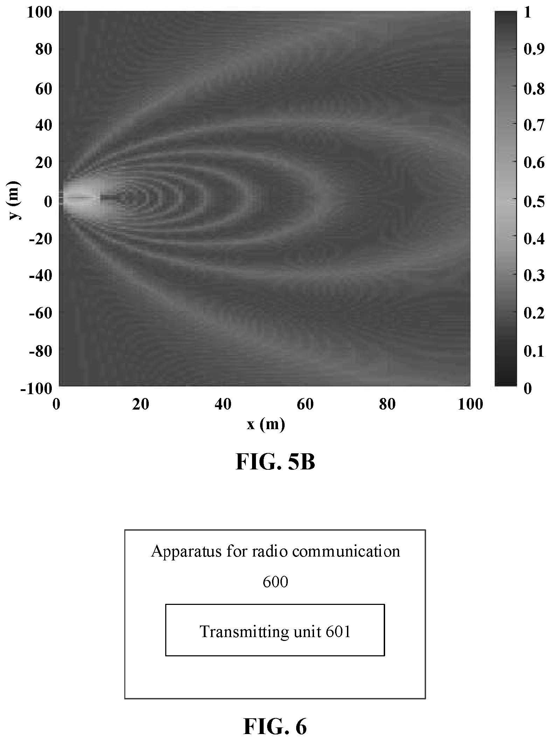

FIG. 5A is a schematic diagram of communication performance of the terminal device at different positions in a spatial coordinate system in the related art. FIG. 5B is a schematic diagram of communication performance of the terminal device at different positions in the communication method provided by an embodiment of the present application. Here, in FIG. 5A and FIG. 5B, the antenna array of the network device is located at the coordinate origin, and if the value of an area is higher, the gray value of the area is higher, and the communication performance is better. Comparing the FIG. 5A with FIG. 5B, it can be seen that the communication performance of the terminal in the communication method provided by an embodiment of the present application in FIG. 5B is better than the communication performance of the terminal in FIG. 5A. It can be seen that, in the method for radio communication provided by the embodiment of the present application, the DFT vector is adjusted through the first parameter(s), thereby obtaining a precoding matrix including the near-field channel characteristics, improving the accuracy of CSI feedback in the near-field scenario, and improving communication performance.

Fig. 6 is a schematic structure diagram of an apparatus 600 for radio communication according to an embodiment of the present application. The apparatus 600 for radio communication includes a transmitting unit 601.

The transmitting unit 601 is configured to transmit first information to a network device. The first information is used to indicate first parameter(s), and a precoding matrix of a downlink channel between the terminal device and the network device is determined based on the first parameter(s) and a discrete Fourier transform (DFT) vector.

In some embodiments, the first parameter(s) is used to adjust a phase of each element in the DFT vector.

In some embodiments, the first information comprises first index information, and the first index information is index information of the first parameter(s) in a first candidate parameter set.

In some embodiments, each candidate parameter in the first candidate parameter set is predefined or configured by the network device.

In some embodiments, each candidate parameter in the first candidate parameter set is determined based on a first reference value and index information corresponding to the each candidate parameters, and the first reference value is predefined or configured by the network device.

In some embodiments, each candidate parameter in the first candidate parameter set is determined based on index information of the DFT vector, a second reference value, and index information corresponding to the each candidate parameter, and the second reference value is predefined or configured by the network device.

In some embodiments, the first candidate parameter set comprises a first value, and in a case where the first information indicates that the first parameter(s) is the first value, the precoding matrix is determined based on the DFT vector.

In some embodiments, the first information comprises first indication information and second indication information, and the first index is determined based on the first indication information and the second indication information.

In some embodiments, the first indication information comprises values of second parameters, and the second indication information comprises values of third parameters.

The first parameter(s) is determined based on the second parameters, the third parameters, and a third reference value, and the third reference value is predefined or configured by the network device.

In some embodiments, the first indication information comprises index information of second parameters in a second candidate parameter set, and the second indication information comprises index information of third parameters in a third candidate parameter set.

The first parameter(s) is determined based on the second parameters and the third parameters.

In some embodiments, a value of each candidate parameter in the second candidate parameter set and/or the third candidate parameter set is predefined or configured by the network device.

In some embodiments, a value of each candidate parameter in the second candidate parameter set is determined based on a fourth reference value, and the fourth parameter value is predefined or configured by the network device; and/or, a value of each candidate parameter in the third candidate parameter set is determined based on a fifth reference value, and the fifth reference value is predefined or configured by the network device.

In some embodiments, the DFT vector comprises a first DFT vector of a first dimension and/or a second DFT vector of a second dimension, and a number of the first parameter(s) comprises multiple, and different first parameters associate DFT vectors of different dimensions.

In some embodiments, the precoding matrix consists of a first sub-matrix of a first dimension, a second sub-matrix of a second dimension, and merging coefficients.

The first sub-matrix is determined based on the first DFT vector and first parameter(s) associated with the first DFT vector, the second sub-matrix is determined based on the second DFT vector, or a first sub-matrix is determined based on the first DFT vector and the second sub-matrix is determined based on the second DFT vector and first parameter(s) associated with the second DFT vector, or the first sub-matrix is determined based on the first DFT vector and first parameter(s) associated with the first DFT vector, and the second sub-matrix is determined based on the second DFT vector and first parameter(s) associated with the second DFT vector.

In some embodiments, the transmitting unit is further configured to transmit third information to the network device. The third information is used to indicate fourth parameter(s), the merging coefficients is determined based on the fourth parameter(s) and a sixth reference value, and the sixth reference value is predefined or configured by the network device.

In some embodiments, the precoding matrix is determined based on one or more of the first parameter(s), the DFT vector, and a distance between an antenna port of the network device and a reference position of an antenna array.

In some embodiments, the reference position may be predefined or configured by the network device.

In some embodiments, the reference position is a midpoint of the antenna array.

In some embodiments, the transmitting unit 601 is further configured to transmit third information to the network device. The third information is used to indicate an adjustment coefficient of each polarization direction of a multi-polarization antenna array.

The precoding matrix is determined based on first parameter(s) corresponding to each polarization direction, a DFT vector, and the adjustment coefficient.

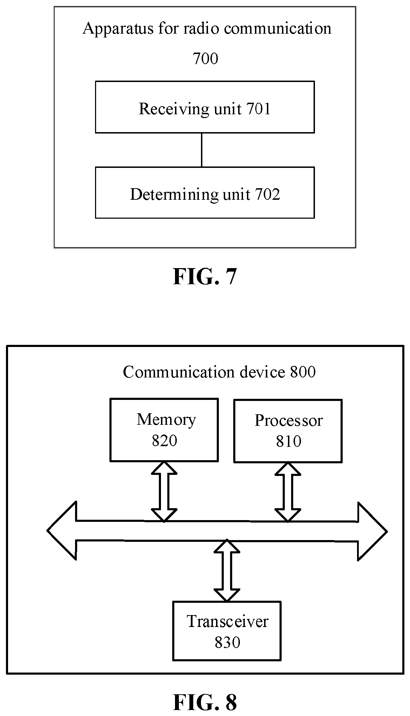

Fig. 7 is a schematic structure diagram of an apparatus 700 for radio communication provided by an embodiment of the present application. The apparatus 700 for radio communication includes a receiving unit 701 and a determining unit 702.

The receiving unit 701 is configured to receive first information transmitted by a terminal device. The first information is used to indicate first parameter(s).

The determining unit 702 is configured to determine a precoding matrix of a downlink channel between the terminal device and the network device based on the first parameter(s) and a discrete Fourier transform (DFT) vector.

In some embodiments, the first parameter(s) is used to adjust a phase of each element in the DFT vector.

In some embodiments, the first information comprises first index information, and the first index information is index information of the first parameter(s) in a first candidate parameter set.

In some embodiments, each candidate parameter in the first candidate parameter set is predefined or configured by the network device.

In some embodiments, each candidate parameter in the first candidate parameter set is determined based on a first reference value and index information corresponding to the each candidate parameters, and the first reference value is predefined or configured by the network device.

In some embodiments, each candidate parameter in the first candidate parameter set is determined based on index information of the DFT vector, a second reference value, and index information corresponding to the each candidate parameter, and the second reference value is predefined or configured by the network device.

In some embodiments, the first candidate parameter set comprises a first value, and in a case where the first information indicates that the first parameter(s) is the first value, the precoding matrix is determined based on the DFT vector.

In some embodiments, the first information comprises first indication information and second indication information, and the first index is determined based on the first indication information and the second indication information.

In some embodiments, the first indication information comprises values of second parameters, and the second indication information comprises values of third parameters.

The first parameter(s) is determined based on the second parameters, the third parameters, and a third reference value, and the third reference value is predefined or configured by the network device.

In some embodiments, the first indication information comprises index information of second parameters in a second candidate parameter set, and the second indication information comprises index information of third parameters in a third candidate parameter set.

The first parameter(s) is determined based on the second parameters and the third parameters.

In some embodiments, a value of each candidate parameter in the second candidate parameter set and/or the third candidate parameter set is predefined or configured by the network device.

In some embodiments, a value of each candidate parameter in the second candidate parameter set is determined based on a fourth reference value, and the fourth parameter value is predefined or configured by the network device, and/or, a value of each candidate parameter in the third candidate parameter set is determined based on a fifth reference value, and the fifth reference value is predefined or configured by the network device.

In some embodiments, the DFT vector comprises a first DFT vector of a first dimension and/or a second DFT vector of a second dimension, and a number of the first parameter(s) comprises multiple, and different first parameters associate DFT vectors of different dimensions.

In some embodiments, the precoding matrix consists of a first sub-matrix of a first dimension, a second sub-matrix of a second dimension, and merging coefficients.

The first sub-matrix is determined based on the first DFT vector and first parameter(s) associated with the first DFT vector, the second sub-matrix is determined based on the second DFT vector, or a first sub-matrix is determined based on the first DFT vector and the second sub-matrix is determined based on the second DFT vector and first parameter(s) associated with the second DFT vector, or the first sub-matrix is determined based on the first DFT vector and first parameter(s) associated with the first DFT vector, and the second sub-matrix is determined based on the second DFT vector and first parameter(s) associated with the second DFT vector.

In some embodiments, the receiving unit 701 is further configured to transmit third information to the network device. The third information is used to indicate fourth parameter(s), the merging coefficients is determined based on the fourth parameter(s) and a sixth reference value, and the sixth reference value is predefined or configured by the network device.

In some embodiments, the precoding matrix is determined based on one or more of the first parameter(s), the DFT vector, and a distance between an antenna port of the network device and a reference position of an antenna array.

In some embodiments, the reference position may be predefined or configured by the network device.

In some embodiments, the reference position is a midpoint of the antenna array.

In some embodiments, the receiving unit 701 is further configured to transmit third information to the network device. The third information is used to indicate an adjustment coefficient of each polarization direction of a multi-polarization antenna array.

The precoding matrix is determined based on first parameter(s) corresponding to each polarization direction, a DFT vector, and the adjustment coefficient.

Those skilled in the art should understand that the related description of the above-described apparatus for radio communication according to the embodiment of the present application may be understood with reference to the related description of the method for radio communication according to the embodiment of the present application.

Fig. 8 is a schematic structure diagram of a communication device 800 according to an embodiment of the present application. The communication device may be a terminal device or a network device. The communication device 800 shown in FIG. 8 includes a processor 810 that can call and run a computer program from a memory to implement the method in the embodiment of the present application.

Optionally, as shown in FIG. 8, the communication device 800 may further include a memory 820. Here, the processor 810 may call and run a computer program from the memory 820 to implement the method in the embodiment of the present application.

The memory 820 may be a separate device independent of the processor 810 or may be integrated in the processor 810.

Optionally, as shown in FIG. 8, the communication device 800 may further include a transceiver 830, and the processor 810 may control the transceiver 830 to communicate with other devices, specifically, may transmit information or data to other devices, or may receive information or data transmitted by other devices.

The transceiver 830 may include a transmitter and a receiver. The transceiver 830 may further include antennas, and the number of antennas may be one or more.

Optionally, the communication device 800 may be a network device according to the embodiment of the present application, and the communication device 800 may implement corresponding processes implemented by the network device in each method according to the embodiment of the present application, and will not be described herein for the sake of conciseness.

Optionally, the communication device 800 may specifically be a mobile terminal/terminal device according to the embodiment of the present application, and the communication device 800 may implement corresponding processes implemented by the mobile terminal/terminal device in each method according to the embodiments of the present application, and will not be described herein for the sake of brevity.

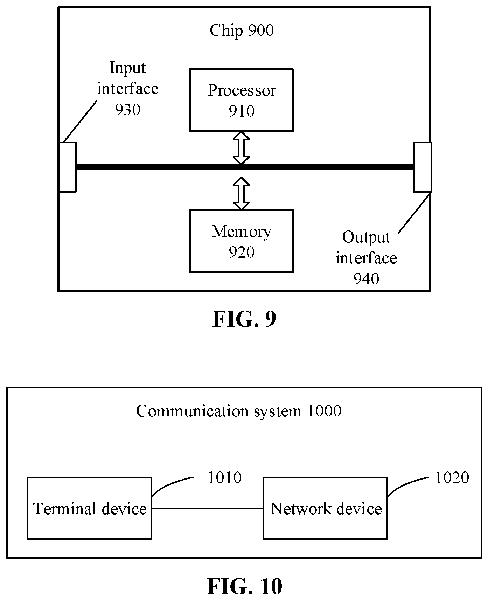

Figure 9 is a schematic structure diagram of a chip according to an embodiment of the present application. The communication device 900 shown in FIG. 9 includes a processor 910 that can call and run a computer program from a memory to implement the method in the embodiment of the present application.

Optionally, as shown in FIG. 9, the communication device 900 may further include a memory 920. Here, the processor 910 may call and run a computer program from the memory 920 to implement the method in the embodiment of the present application.

The memory 920 may be a separate device independent of the processor 910 or may be integrated in the processor 910.

Optionally, the communication device 900 may further include an input interface 930. The processor 910 may control the input interface 930 to communicate with other devices or chips, specifically, may acquire information or data transmitted by other devices.

Optionally, the communication device 900 may further include a memory 940. The processor 910 may control the output interface 940 to communicate with other devices or chips, specifically, may output information or data to other devices or chips.

Optionally, the chip may be applied to the network device according to the embodiment of the present application, and the chip may implement corresponding processes implemented by the network device in each method according to the embodiments of the present application, and will not be described herein for the sake of conciseness.

Optionally, the chip may be applied to a mobile terminal/terminal device according to the embodiments of the present application, and the chip may implement corresponding processes implemented by the mobile terminal/terminal device in each method according to the embodiments of the present application, and will not be described herein for the sake of brevity.

It should be understood that the chip mentioned in the embodiments of the present application may also be referred to as a system-level-chip, a system chip, a chip system or a system-on-chip chip.

Fig. 10 is a schematic block diagram of a communication system 1000 according to an embodiment of the present application. As shown in FIG. 10, the communication system 1000 may include terminal devices 1010 and a network device 1020.

Here, the terminal device 1010 may be used to implement the corresponding functions implemented by the terminal device in the above-described methods, and the network device 1020 may be used to implement the corresponding functions implemented by the network device in the above-described methods, which will not be described herein for the sake of brevity.

It should be understood that the processor of the embodiment of the present application may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component, which may implement or execute the methods, steps, and logical block diagrams disclosed in the embodiments of the present application. The general purpose processor may be a microprocessor or the processor, or may be any conventional processor or the like. The steps of the method disclosed in connection with the embodiments of the present application may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the steps of the above method.

It can be understood that the memory in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in embodiments of the present application is intended to include, but is not limited to, these and any other suitable types of memory.

Embodiments of the present application also provide a computer-readable storage medium for storing a computer program.

Optionally, the computer-readable storage medium may be applied to the network device according to the embodiment of the present application, and the computer-readable storage medium may cause a computer to implement corresponding processes implemented by the network device in each method according to the embodiments of the present application, and will not be described herein for the sake of conciseness.

Optionally, the computer-readable storage medium may be applied to a mobile terminal/terminal device according to the embodiments of the present application, and the computer-readable storage medium may cause a computer to implement corresponding processes implemented by the mobile terminal/terminal device in each method according to the embodiments of the present application, and will not be described herein for the sake of brevity.

Embodiments of the present application also provide a computer program product, including computer program instructions.

Optionally, the computer program product may be applied to the network device according to the embodiment of the present application, and the computer program instructions may cause a computer to implement corresponding processes implemented by the network device in each method according to the embodiments of the present application, and will not be described herein for the sake of conciseness.

Optionally, the computer program product may be applied to a mobile terminal/terminal device according to the embodiments of the present application, and the computer program instructions may cause a computer to implement corresponding processes implemented by the mobile terminal/terminal device in each method according to the embodiments of the present application, and will not be described herein for the sake of brevity.

Embodiments of the present application also provide a computer program.

Optionally, the computer program may be applied to the network device according to the embodiment of the present application, and when the computer program is run on a computer, the computer program may cause the computer to implement corresponding processes implemented by the network device in each method according to the embodiments of the present application, and will not be described herein for the sake of conciseness.

Optionally, the computer program may be applied to a mobile terminal/terminal device according to the embodiments of the present application, and when the computer program is run on a computer, the computer program may cause the computer to implement corresponding processes implemented by the mobile terminal/terminal device in each method according to the embodiments of the present application, and will not be described herein for the sake of brevity.

Those of ordinary skill in the art will appreciate that the elements and algorithmic steps of the various examples described in combination with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present application.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

The functions may be stored in a computer-readable storage medium if implemented in the form of software functional units and sold or used as independent products. Based on such an understanding, the technical solutions according to the application in essence or the part contributing to the prior art can be embodied in the form of a software product, and the computer software product is stored in a storage medium, which includes several instructions so that a computer device (may be a personal computer, a server, a network device or the like) implements all or part of steps of the method according to respective embodiments of the application. The aforementioned storage medium includes various media capable of storing a program code such as a USB disk, a mobile hard drive disk, a Read-Only Memory (ROM), a Random Access Memory (RAM), a magnetic disk or an optical disk.

The above is merely a specific embodiment of the present application, but the scope of protection of the present application is not limited thereto, and any change or substitution, within the technical scope disclosed in the present application, that can be easily thought of by the person skilled in the art should be covered within the scope of protection of the present application. Therefore, the scope of protection of the present application should be subject to the scope of protection of the claims.

**Claims**

1. A method for radio communication, comprising:
transmitting, by a terminal device, first information to a network device, wherein the first information is used to indicate first parameter(s), and a precoding matrix of a downlink channel between the terminal device and the network device is determined based on the first parameter(s) and a discrete Fourier transform (DFT) vector.

2. The method of claim 1, wherein the first parameter(s) is used to adjust a phase of each element in the DFT vector.

3. The method of claim 1 or 2, wherein the first information comprises first index information, and the first index information is index information of the first parameter(s) in a first candidate parameter set.

4. The method of claim 3, wherein
each candidate parameter in the first candidate parameter set is predefined or configured by the network device.

5. The method of claim 3, wherein
each candidate parameter in the first candidate parameter set is determined based on a first reference value and index information corresponding to the each candidate parameters, and the first reference value is predefined or configured by the network device.

6. The method of claim 3, wherein
each candidate parameter in the first candidate parameter set is determined based on index information of the DFT vector, a second reference value, and index information corresponding to the each candidate parameter, and the second reference value is a predefined or configured by the network device.

7. The method of any one of claims 3 to 6, wherein
the first candidate parameter set comprises a first value, and in a case where the first information indicates that the first parameter(s) is the first value, the precoding matrix is determined based on the DFT vector.

8. The method of claim 1 or 2, wherein the first information comprises first indication information and second indication information, and the first index is determined based on the first indication information and the second indication information.

9. The method of claim 8, wherein the first indication information comprises values of second parameters, and the second indication information comprises values of third parameters,
wherein the first parameter(s) is determined based on the second parameters, the third parameters, and a third reference value, and the third reference value is predefined or configured by the network device.

10. The method of claim 8, wherein the first indication information comprises index information of second parameters in a second candidate parameter set, and the second indication information comprises index information of third parameters in a third candidate parameter set,
wherein the first parameter(s) is determined based on the second parameters and the third parameters.

11. The method of claim 10, wherein a value of each candidate parameter in the second candidate parameter set and/or the third candidate parameter set is predefined or configured by the network device.

12. The method of claim 10, wherein a value of each candidate parameter in the second candidate parameter set is determined based on a fourth reference value, and the fourth parameter value is predefined or configured by the network device,
and/or
a value of each candidate parameter in the third candidate parameter set is determined based on a fifth reference value, and the fifth reference value is predefined or configured by the network device.

13. The method of any one of claims 1 to 12, wherein
the DFT vector comprises a first DFT vector of a first dimension and/or a second DFT vector of a second dimension, and a number of the first parameter(s) comprises multiple, and different first parameters associate DFT vectors of different dimensions.

14. The method of claim 13, wherein the precoding matrix consists of a first sub-matrix of a first dimension, a second sub-matrix of a second dimension, and merging coefficients,

the first sub-matrix is determined based on the first DFT vector and first parameter(s) associated with the first DFT vector, the second sub-matrix is determined based on the second DFT vector, or
a first sub-matrix is determined based on the first DFT vector and the second sub-matrix is determined based on the second DFT vector and first parameter(s) associated with the second DFT vector, or
the first sub-matrix is determined based on the first DFT vector and first parameter(s) associated with the first DFT vector, and the second sub-matrix is determined based on the second DFT vector and first parameter(s) associated with the second DFT vector.

15. The method of claim 14, further comprising:
transmitting, by the terminal device, third information to the network device, wherein the third information is used to indicate fourth parameter(s), the merging coefficients is determined based on the fourth parameter(s) and a sixth reference value, and the sixth reference value is predefined or configured by the network device.

16. The method of any of claims 1-15, wherein the precoding matrix is determined based on one or more of the first parameter(s), the DFT vector, and a distance between an antenna port of the network device and a reference position of an antenna array.

17. The method of claim 16, wherein the reference position is predefined or configured by the network device.

18. The method of any one of claims 16 or 17, wherein the reference position is a midpoint of the antenna array.

19. The method of any one of claims 1- 18, further comprising:

transmitting, by the terminal device, third information to the network device, wherein the third information is used to indicate an adjustment coefficient of each polarization direction of a multi-polarization antenna array, wherein the precoding matrix is determined based on first parameter(s) corresponding to each polarization direction, a DFT vector, and the adjustment coefficient.

20. A method for radio communication, comprising:

receiving, by a network device, first information transmitted by a terminal device, wherein the first information is used to indicate first parameter(s);
determining, by the network device, a precoding matrix of a downlink channel between the terminal device and the network device based on the first parameter(s) and a discrete Fourier transform (DFT) vector.

21. The method of claim 20, wherein the first parameter(s) is used to adjust a phase of each element in the DFT vector.

22. The method of claim 20 or 21, wherein the first information comprises first index information, and the first index information is index information of the first parameter(s) in a first candidate parameter set.

23. The method of claim 22, wherein
each candidate parameter in the first candidate parameter set is predefined or configured by the network device.

24. The method of claim 22, wherein
each candidate parameter in the first candidate parameter set is determined based on a first reference value and index information corresponding to the each candidate parameters, and the first reference value is predefined or configured by the network device.

25. The method of claim 22, wherein
each candidate parameter in the first candidate parameter set is determined based on index information of the DFT vector, a second reference value, and index information corresponding to the each candidate parameter, and the second reference value is a predefined or configured by the network device.

26. The method of any one of claims 22 to 25, wherein
the first candidate parameter set comprises a first value, and in a case where the first information indicates that the first parameter(s) is the first value, the precoding matrix is determined based on the DFT vector.

27. The method of claim 20 or 21, wherein the first information comprises first indication information and second indication information, and the first index is determined based on the first indication information and the second indication information.

28. The method of claim 27, wherein the first indication information comprises values of second parameters, and the second indication information comprises values of third parameters,
wherein the first parameter(s) is determined based on the second parameters, the third parameters, and a third reference value, and the third reference value is predefined or configured by the network device.

29. The method of claim 27, wherein the first indication information comprises index information of second parameters in a second candidate parameter set, and the second indication information comprises index information of third parameters in a third candidate parameter set,
wherein the first parameter(s) is determined based on the second parameters and the third parameters.

30. The method of claim 29, wherein a value of each candidate parameter in the second candidate parameter set and/or the third candidate parameter set is predefined or configured by the network device.

31. The method of claim 29, wherein a value of each candidate parameter in the second candidate parameter set is determined based on a fourth reference value, and the fourth parameter value is predefined or configured by the network device,
and/or
a value of each candidate parameter in the third candidate parameter set is determined based on a fifth reference value, and the fifth reference value is predefined or configured by the network device.

32. The method of any one of claims 20 to 31, wherein the DFT vector comprises a first DFT vector of a first dimension and/or a second DFT vector of a second dimension, and a number of the first parameter(s) comprises multiple, and different first parameters associate DFT vectors of different dimensions.

33. The method of claim 32, wherein the precoding matrix consists of a first sub-matrix of a first dimension, a second sub-matrix of a second dimension, and merging coefficients,

the first sub-matrix is determined based on the first DFT vector and first parameter(s) associated with the first DFT vector, the second sub-matrix is determined based on the second DFT vector, or
a first sub-matrix is determined based on the first DFT vector and the second sub-matrix is determined based on the second DFT vector and first parameter(s) associated with the second DFT vector, or
the first sub-matrix is determined based on the first DFT vector and first parameter(s) associated with the first DFT vector, and the second sub-matrix is determined based on the second DFT vector and first parameter(s) associated with the second DFT vector.

34. The method of claim 33, further comprising:
receiving, by the network device, third information transmitted by the terminal device, wherein the third information is used to indicate fourth parameter(s), the merging coefficients is determined based on the fourth parameter(s) and a sixth reference value, and the sixth reference value is predefined or configured by the network device.

35. The method of any of claims 20 to 34, wherein the precoding matrix is determined based on one or more of the first parameter(s), the DFT vector, and a distance between an antenna port of the network device and a reference position of an antenna array.

36. The method of claim 35, wherein the reference position is predefined or configured by the network device.

37. The method of any one of claims 35 or 36, wherein the reference position is a midpoint of the antenna array.

38. The method of any one of claims 20- 37, further comprising:

transmitting, by the terminal device, third information to the network device, wherein the third information is used to indicate an adjustment coefficient of each polarization direction of a multi-polarization antenna array,

wherein the precoding matrix is determined based on first parameter(s) corresponding to each polarization direction, a DFT vector, and the adjustment coefficient.

39. An apparatus for radio communication, applied to a terminal device, comprising:
a transmitting unit, configured to transmit first information to a network device, wherein the first information is used to indicate first parameter(s), and a precoding matrix of a downlink channel between the terminal device and the network device is determined based on the first parameter(s) and a discrete Fourier transform (DFT) vector.

40. An apparatus for radio communication, applied to a network device, comprising:

a receiving unit, configured to receive first information transmitted by a terminal device, wherein the first information is used to indicate first parameter(s);
a determining unit, configured to determine a precoding matrix of a downlink channel between the terminal device and the network device based on the first parameter(s) and a discrete Fourier transform (DFT) vector.

41. A terminal device comprising: a processor and a memory, wherein the memory is configured to store a computer program and the processor is configured to invoke and execute the computer program stored in the memory to perform a method of any one of claims 1 to 19.

42. A network device comprising: a processor and a memory, wherein the memory is configured to store a computer program and the processor is configured to invoke and execute the computer program stored in the memory to perform the method of any one of claims 20 to 38.

43. A chip comprising: a processor for invoking and executing a computer program from a memory such that a device on which the chip is mounted performs a method of any of claims 1 to 19.

44. A chip comprising: a processor for invoking and executing a computer program from a memory such that a device on which the chip is mounted performs a method of any of claims 20 to 38.

45. A computer-readable storage medium, configured to store a computer program, wherein the computer program causes a computer to implement the method of any one of claims 1 to 19.

46. A computer-readable storage medium, configured to store a computer program, wherein the computer program causes a computer to implement the method of any one of claims 20 to 38.

47. A computer program product, comprising computer program instructions, wherein the computer program instructions cause a computer to implement the method of any one of claims 1 to 19.

48. A computer program product, comprising computer program instructions, wherein the computer program instructions cause a computer to implement the method of any one of claims 20 to 38.

49. A computer program, wherein the computer program causes a computer to implement the method of any one of claims 1 to 19.

50. A computer program, wherein the computer program causes a computer to implement the method of any one of claims 20 to 38.

100

FIG. 1

2N1N2 x 2L   2L x M          M x N3

FIG. 2

FIG. 3

Terminal device

Network device

S110, transmit first information, the first information being used to indicate first parameter(s)

S120, determine a precoding matrix of the downlink channel between the terminal device and the network device based on the first parameter(s) and the DFT vector

**FIG. 4**

**FIG. 5A**

**FIG. 5B**

Apparatus for radio communication

600

Transmitting unit 601

**FIG. 6**

Apparatus for radio communication
700

Receiving unit 701

Determining unit 702

**FIG. 7**

Communication device 800

Memory
820

Processor
810

Transceiver
830

**FIG. 8**

**FIG. 9**

**FIG. 10**

## INTERNATIONAL SEARCH REPORT

| International application No. |
| --- |
| **PCT/CN2023/122294** |

| A. | CLASSIFICATION OF SUBJECT MATTER |
| --- | --- |

H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXTC, DWPI, 3GPP: 离散傅里叶变换, 相位, 索引, 码本, 预编码矩阵, 增强, DFT, discrete fourier transform, phase, index, codebook, precoding matrix, enhancement, eTypeII

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023208493 A1 (SAMSUNG ELECTRONICS CO., LTD.) 29 June 2023 (2023-06-29) description, paragraphs [0083]-[0173], and figures 6-7B | 1-50 |
| X | CN 114070374 A (ZTE CORP.) 18 February 2022 (2022-02-18) description, paragraphs [0046]-[0244] and [0273]-[0280], and figures 1-7 | 1-50 |
| X | WO 2023022565 A1 (LG ELECTRONICS INC.) 23 February 2023 (2023-02-23) description, paragraphs [256]-[373], and figure 8 | 1-50 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2024** | **18 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122294**

| Patent document cited in search report | | | Publication date (day/month/year) | Patent family member(s) | | | Publication date (day/month/year) |
|---|---|---|---|---|---|---|---|
| US | 2023208493 | A1 | 29 June 2023 | WO | 2023128600 | A1 | 06 July 2023 |
| CN | 114070374 | A | 18 February 2022 | None | | | |
| WO | 2023022565 | A1 | 23 February 2023 | KR | 20240042439 | A | 02 April 2024 |

Form PCT/ISA/210 (patent family annex) (July 2022)